# EUROPEAN PATENT SPECIFICATION

(11) **EP 2 465 668 B1**
(45) Date of publication and mention of the grant of the patent: **18.05.2016**
(21) Application number: 11193564.9
(22) Date of filing: 14.12.2011
(51) Int. Cl.: B29C 70/38

(54) **Fibre placement system and method**
Faserauflegesystem und Verfahren
Système et procédé de placement de fibres

(30) Priority: 15.12.2010 US 969106
(43) Date of publication of application: 20.06.2012
(73) Proprietor: The Boeing Company, Chicago, IL 60606-1596 (US)
(72) Inventor: Pedigo, Samuel F, Lake Forest Park, WA Washington 98155 (US); Johnson, Brice A, Federal Way, WA Washington 98023 (US)
(74) Representative: Boult Wade Tennant

(56) References cited:
- EP-A1- 2 402 147
- WO-A1-2009/062749

## Description

### BACKGROUND

The field of the disclosure relates generally to fiber placement systems, and more specifically, to methods and systems for fiber placement using a stationary dispenser.

In traditional fiber-placement systems, the motion system (such as a robot or other numerically controlled equipment) is used to pass a complex fiber dispensing system or head over either a stationary mandrel, or a mandrel mounted to a rotary axis. However, it is complex and difficult to move the fiber dispensing system and to supply the fiber material to the mobile head. For example, the fiber dispensing system is part of the head and therefore the head is necessarily large in size. When moving the head to dispense fiber over a mandrel that is complex in shape, it is possible, due to the bulk of the dispensing head that inadvertent collisions between the head and the part being laid up will occur. Such a possibility increases when it is considered that for optimal placement of the fiber material, it is desirable to have the head normal to the surface onto which the material is being dispensed. For fiber placement machines that have the material mounted on the machine, but not on the head, using a creel assembly, the fiber path can be complex and prone to inducing flaws in the material with multiple redirects, combs, and pulley assemblies used to guide material from a creel mounted on one or two axes of a machine, to the delivery head mounted onto six or more axis.

As mentioned in the preceding paragraph, traditional fiber placement systems move the fiber dispenser over the mandrel. One disadvantage to such a system is that the motion system must either carry the supply of fiber material as well as all of the electrical, mechanical, and pneumatic systems required to complete the fiber placement operation, or mount a creel system somewhere on the machine as near to the head, with all of the systems complexity as part of the moving system. For head mounted materials, the amount of fiber that can reasonably be carried by the traditional fiber placement systems is therefore limited, which leads to down time. For machine mounted creels, the multiple material redirect systems necessary to guide material to the head though additional head articulation, creates touch points that can induce flaws in the material, or collect debris from the fiber or resin, and cause the material to jam, resulting in downtime. Additionally, if the production plan calls for a transfer of the patch of material from the mandrel to a larger assembly, a second motion system must be employed.

WO 2009/062749 relates to a device for producing a fiber composite material having at least one delivery device for placing at least one web-shaped material on a surface of a tool mold or a partially finished product for producing the fiber composite component, wherein the device comprises at least one carriage upon which the delivery device is disposed, and a guide path at least partially surrounding the surface in the circumferential direction thereof, upon which the carriage for moving the delivery device is movable relative to the surface.

### BRIEF DESCRIPTION

In one aspect of the invention, there is provided a fiber placement system as set out in claim 1.

In another aspect of the invention, there is provided a method for fabrication of a composite fiber part as set out in claim 13.

The features, functions, and advantages that have been discussed can be achieved independently in various embodiments or may be combined in yet other embodiments further details of which can be seen with reference to the following description and drawings.

### BRIEF DESCRIPTION OF THE DRAWINGS

Figure 1 is an illustration of a known fiber placement device.
Figure 2 is an illustration of a fiber placement system that includes a layup mandrel mounted to a robot and a stationary fiber placement dispensing system.
Figure 3 is an illustration of the system of Figure 2 placing a patch of composite material onto a part.
Figure 4 is an illustration of the system of Figure 2 showing the mandrel returning to the fiber-placement delivery system after placement of the patch of composite material.
Figure 5 is a block diagram of a system 200 suitable for use with the fiber placement system of Figures 2-4.
Figure 6 is a diagram of one possible system architecture for the controller used in the system of Figure 5.
Figure 7 is a flowchart illustrating a process for fabricating and placing a part using the system of Figures 2-4.
Figure 8 is a flow diagram of an aircraft production and service methodology.
Figure 9 is a block diagram of an aircraft.

### DETAILED DESCRIPTION

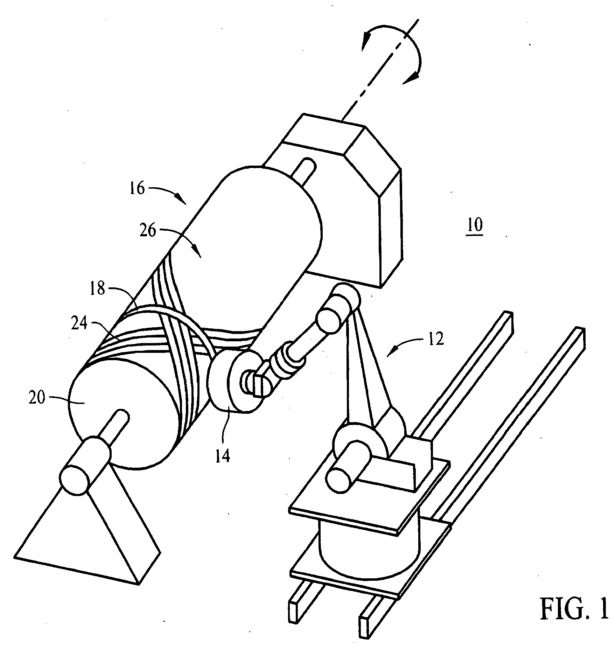

Figure 1 is an illustration of a known fiber placement device 10 that includes a positioning device 12 and an end effector 14. The positioning device 12 is configured to position or otherwise control the movement of the end effector 14. Particularly, the positioning device 12 is a robotic armature, gantry-type, or post mill type positioning device configured to control multiple axes of movement.

Fiber placement device 10 is configured to fabricate an item 16 by applying a course material 18 on a form 20. Typically, the item 16 is fabricated from multiple plies or layers, which comprises and series of material courses laid adjacent to one another 18. In various forms, the end effector 14 includes a compaction roller (not shown in Figure 1) and/or sweep to apply the course material 18 to the form 20. The form 20 is configured to provide a suitably stable and finished surface for ply placement. As shown, the form 20 is controlled to rotate about an axis. When controlled to rotate thusly, the form 20 is typically referred to as a mandrel. It should be understood that the form 20, or mandrel, may be very complex in shape, depending on the part being fabricated, and may include deep concave surfaces. In other embodiments, the form 20 may be stationary or controlled to move in various axes. For example, the form 20 may be secured to a sliding table or X-Y table. Movement of the form 20, and movement of the positioning device 12, act to position the end effector 14.

Furthermore, the movement of the form 20 and the positioning device 12 is generally coordinated to such a degree that the devices operate essentially as a single unit. Characteristics of the form 20, such as size, shape, contour, and the like, are based upon design parameters of an item 16. The item 16 is shown in Figure 1 being constructed from a plurality of courses 24. Each layer of the courses 24 that is placed upon the form 20 or a substrate 26 is described as a ply and the item 16 is typically fabricated from a plurality of plies. The substrate 26 includes the form 20 surface and/or a previously applied course 24. As mentioned above, should the size, shape, and contour of the form become complex, it can be difficult to place the end effector 14 in the proper position, when fabricating a part, without unwanted physical contact occurring between the two.

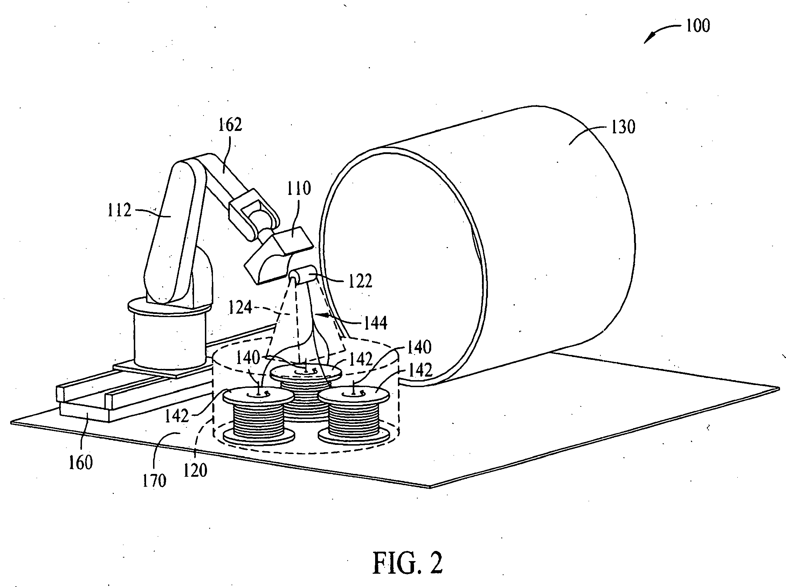

With regard to the above description of a known fiber placement device, the embodiments described in the following paragraphs are directed to a manufacturing method and system for the placement of fiber. Referring to Figure 2, a fiber placement system 100 includes a layup mandrel 110 mounted to a robot 112. The layup mandrel 110 interfaces with a stationary fiber placement dispensing system 120 which allows small to mid-size charges to be fabricated using the robot 112 to pass the mandrel 110 over the stationary fiber placement dispensing system 120 in a pattern that results in the fabrication, for example, of a patch 150 of composite material. With regard to the described embodiment, some existing fiber placement machines have the mandrel or tool mounted into a rotary axis in order to build barrel like structures similar to filament winding. Fiber placement system 100 manipulates the layup mandrel in more than one degree of freedom, while fiber placement dispensing system 120 remains stationary.

Fiber placement dispensing system 120 includes a compaction roller 122 proximate a distal end of a delivery head 124, for placement of the fiber onto the mandrel 110. As used herein, a delivery head refers to the assembly of systems that can dispense, compact, or cut material. One part of delivery head 124 is the compaction roller 122. It should be noted that mandrel 110 can be fabricated to have multiple sizes shapes and contours and that one advantage of stationary dispensing system 120 is that larger spools of fibers can be utilized, as compared to the prior art systems that had to carry the fiber being placed. Another advantage to fiber placement system 100 is that one or more larger creels 140, sized for such larger spools 142 of fiber 144, can be located at a fixed station, incorporating a fixed fiber path between the delivery head 124 and the creel 140, simplifying the conveying of fibers 144 from the creels 140 to the delivery head 124. In such an embodiment, the creels 140 and spools 142 can be remotely mounted from the actual delivery head to provide more clearance for the mandrel 110 with respect to the delivery head 124 thereby allowing for the fabrication of parts incorporating larger contours. In the embodiment shown in Figure 2, multiple creels 140 and spools 142 are located within the dispensing system 120 as shown.

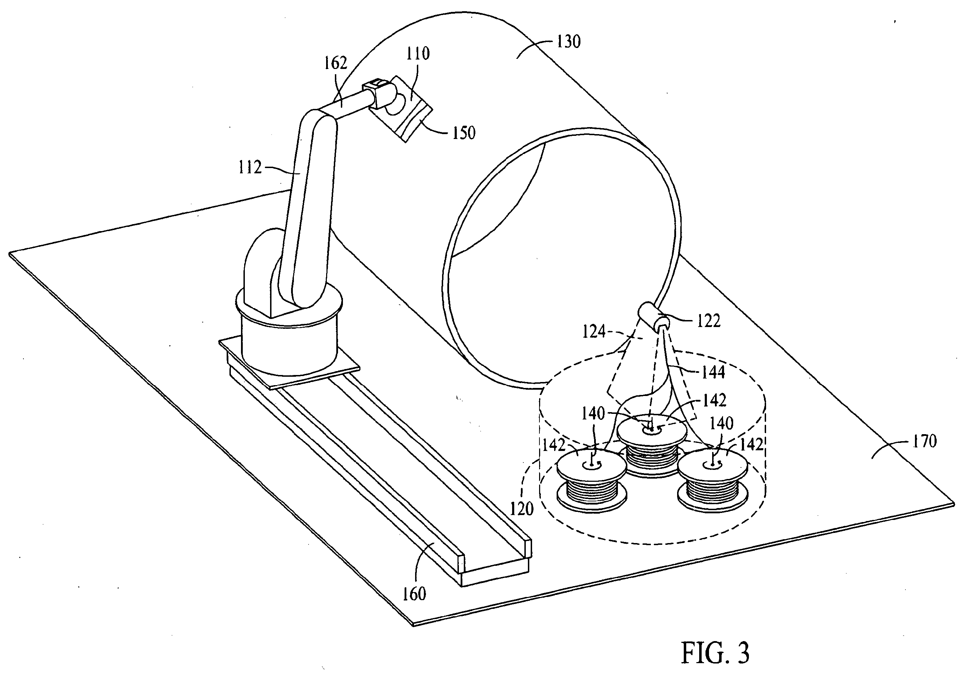

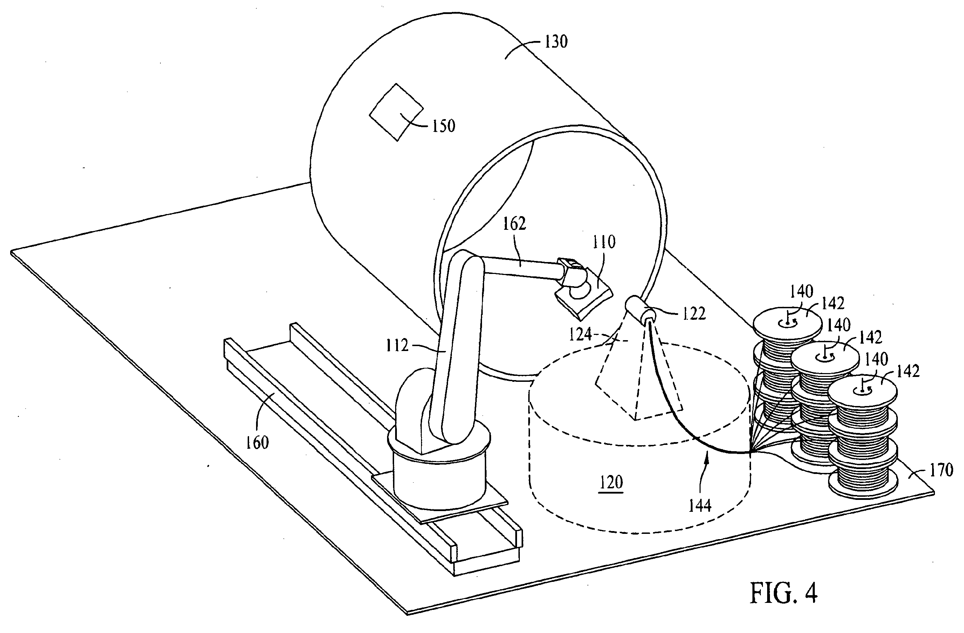

More specifically, the complex fiber placement device (dispensing system 120) is fixed and the robot 112 moves the mandrel 110 about the compaction roller 120 such that the composite material is compacted onto and adheres to the mandrel 110. As shown, robot is movable on a track 160 and has an articulating arm 162. Further, once the material has been deposited onto the robot-mounted mandrel 110, the robot 112 can then easily move the mandrel 110 to a larger assembly, such as barrel layup 130 and transfer a patch 150 of composite fiber material as shown in Figures 3 and 4. In another embodiment, an automated guided vehicle (AGV) is provided, with the robotic arm mounted thereon, the AGV operable to move the robotic arm for transfer of the composite fiber part from the mandrel 110 onto an assembly such as barrel layup 130. The particular
embodiment utilized is at least partially dependent on the size and complexity of the part being fabricated.

With the described embodiments, the conventional solution of laying fiber onto a stationary or single axis rotating mandrel using a dispensing device mounted on a robotic arm is abandoned. Instead, and as further illustrated in Figure 3, the mandrel 110 is carried by the robot 112 during the application of the fiber to the mandrel 110 from the dispensing system and during transfer of the patch 150 of material to a larger layup, such as may be placed on barrel layup 130. As shown in Figure 4, a plurality of creels 140 and spools may also be remotely located from dispensing system 120, with the respective fibers 144 being fed into dispensing system for routing to delivery head 122. The operation of such an embodiment allows for additional spools 142 to be utilized simultaneously, for fabrication of multiple fiber parts. In addition, such an arrangement allows for much larger spools of fiber 142 to be utilized.

System 100 includes a material delivery system (dispensing system 120) mounted to the floor 170 instead of being carried by a motion system as done in currently existing systems. Further, in system 100, the mandrel 110 is mounted to the motion system (robot 112) instead of mounted to the floor 170 as is the case in currently existing systems. In one embodiment, compaction roller 122 incorporates a single axis of rotation to accommodate different fiber angles and minimize at least a portion of the motion of the mandrel 110. In one example, a high aspect ratio mandrel benefits from rotation of compaction roller 122 for the 0°/45°/-45°/90° ply orientations commonly utilized without having to spin the mandrel 110 through that range of motion.

System 100 is distinct with respect to existing solutions in that material delivery and application in traditional fiber placement requires a complex electronic, pneumatic and mechanical system. If such a complex system is then mounted on a robot arm, the complexity is compounded by the requirement to carry the electrical and pneumatic cables and hoses to a mobile delivery head. For a creel mounted near, but not on the delivery head, the conveying of the material to the head remains complex. In addition, the weight and size of the mobile delivery head then limits the speed with which the motion system can apply the material.

The size of the mobile delivery head can also limit access in high-contour areas of the part being fabricated. With the embodiments described herein, the mandrel 110 is a simple solid tool mounted to the robot arm with no control system and no cables or hoses. The complex material delivery components are mounted to the floor as they are a part of the dispensing system. In addition to solving the above mentioned limitations, the floor-mounted delivery system can carry a larger cache of raw materials which will allow less down-time in operation.

Finally, system 100 affords a solution when it is desired to layup a patch of material, such as patch 150, and then to transfer the patch 150 from the mandrel 110 to a larger assembly such as barrel layup 130. The robot 112 carrying the mandrel 110 can simply move the patch 150 from the delivery system (dispenser 120) to the assembly area (layup barrel 130) with no additional steps.

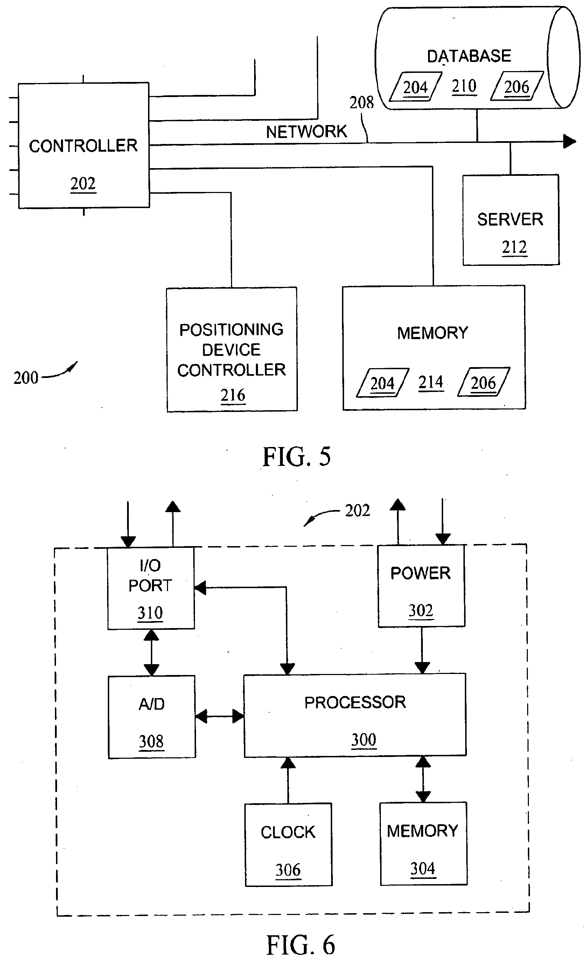

Figure 5 is a block diagram of a system 200 suitable for use with the fiber placement system 100. As shown, system 200 includes a controller 202. The controller 202 is operable to execute computer readable code. In this regard, the system 200 includes a set of computer readable instructions or code 204. According to the code 204, the controller 202 is configured to access a file 206. This file 206 includes one or more of the following: a computer readable model of the composite item to be fabricated (e.g., patch 150); a computer readable representation of the surface of the mandrel 110; a computer readable representation of the surface of the barrel layup 130; a computer readable representation of the edges of the barrel layup 130; the thickness of the composite item to be fabricated; a source code based upon at least one of the composite item to be fabricated, the mandrel 110, and the barrel layup 130; a set of movement instructions for the robot 112 based upon the source code; data gathered while laying up the composite item to be fabricated; timestamp information; positional information; identification numbers; and the like.

The controller 202 is further configured to communicate across a network 208. The network 208 is optionally included to provide additional data storage and/or processing capabilities. In this regard, the network includes a database 210 and a server 212. The database 210 is configured to store a copy of the code 204 and/or file 206. The server 212 is configured to generate, store, and perform any suitable processing of the code 204 and/or file 206. In this manner, composite items, such as the composite item (patch 150), generated on computer aided design (CAD) machines such as the server 212, for example, may be forwarded to the fiber placement system 100. In addition, the server 212 is operable, via the network 208, to forward updates for the code 204 and/or file 206. In addition, the system 200 optionally includes a memory 214. If present, the memory 214 is configured to store a copy of the code 204 and/or file 206.

A positioning device controller 216 is optionally included in the system 200 depending upon the requirements of the various actuators and/or servo motors associated with fiber placement system 100. Depending upon the particular configuration of the fiber placement system 100, a plurality of actuators and/or servo motors modulate the rotation, position, speed, direction, and the like of the robot 112, and thus the mandrel 110 of the fiber placement system 100. More particularly, these actuators and/or servo motors of the robot 112 are at least configured to modulate the various axes of the mandrel 110 and/or control operation of the dispensing system 120, for example, the clamps, tensioners, spools, cutting assemblies and cutters therein. If present, parameters of the positioning device controller 216 are based upon the specification of the various actuators, servos, and/or the controller 202. The positioning device controller 216, if present, is configured to control some or all of these actuators and/or servo motors. In addition, these actuators and/or servo motors are optionally operable to be modulated by the controller 202 directly, and thus, the system 200 may omit the positioning device controller 216.

The system 200, optionally, further includes a plurality of sensors configured to sense the various suitable operating conditions or attributes of the fiber placement system 100. Examples of suitable attributes include some or all of the temperature of the fibers and/or mandrel, feed rate and direction, material placement, backing integrity, supply of tow, and/or the like.

Figure 6 is a possible system architecture for controller 202. As shown, the controller 202 includes a processor 300. Processor 300 is operably connected to a power supply 302, memory 304, clock 306, analog to digital converter (A/D) 308, and an input/output (I/O) port 310. The I/O port 310 is configured to receive signals from any suitably attached electronic device and forward these signals to the A/D 308 and/or the processor 300. If the signals are in analog format, the signals may proceed via the A/D 308. In this regard, the A/D 308 is configured to receive analog format signals and convert these signals into corresponding digital format signals. Conversely, the A/D 308 is configured to receive digital format signals from the processor 300, convert these signals to analog format, and forward the analog signals to the I/O port 310. In this manner, electronic devices configured to receive analog signals may intercommunicate with the processor 300.

The processor 300 is configured to receive and transmit signals to and from the A/D 308 and/or the I/O port 310. The processor 300 is further configured to receive time signals from the clock 306. In addition, the processor 300 is configured to store and retrieve electronic data to and from the memory 304. Furthermore, the processor 300 is configured to determine signals operable to modulate the positioning device controller 216 and thereby control the various actuators and/or servo motors of the fiber placement system 100 to exert a particular force and/or rotate to a particular degree.

In one embodiment, the processor 300 is configured to execute the code 204. Based on this set of instructions and signals from the various components of the fiber placement system 100, the processor 300 is configured to: determine a set of movement instructions for the robot 112 (and the mandrel 110 attached thereto), provide instructions to dispensing system 120 for the disbursement of fiber and the like.

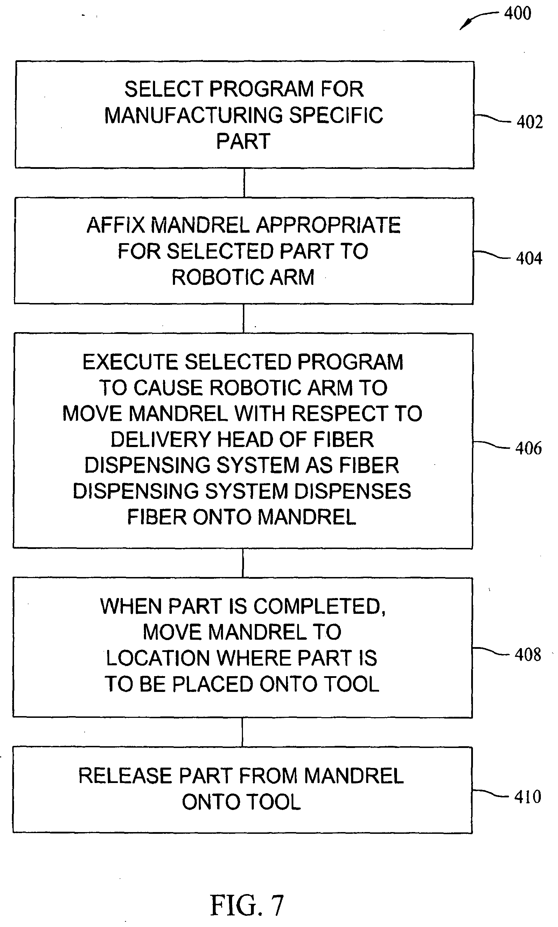

Figure 7 is a flowchart 400 illustrating a process for fabricating and placing a part using the fiber placement system 100 described herein. A program for manufacturing a specific part is selected 402. A mandrel appropriate for the selected part is affixed 404 to the robotic arm. The selected program is then executed 406 to cause the robotic arm to move the mandrel with respect to the compaction roller and delivery head of the fiber-placement delivery system as the fiber-placement delivery system dispenses the fiber onto the mandrel. When fabrication of the part is completed, the mandrel is moved 408 to the location where the part is to be placed onto a tool and the part is released 410 from the mandrel onto the tool.

The described embodiments are generally related to a fiber placement system that includes a robot or other numeric controlled motion system, a fiber-placement layup mandrel mounted on the motion system, a stationary-mounted fiber-placement delivery system, and control software to guide the robot (and hence the mandrel) while also controlling the fiber-placement delivery system. Generally, while such embodiments are not limited in size or configuration, the described system is particularly useful for performing fiber-placement of composite charges on small to mid-size parts. Size of such parts is limited only by the load carrying capacity of the device utilized to manipulate the mandrel. In addition, this system can be used to transfer intermediate patches (doublers) of composite material from the fiber-placement area to larger layups such as fuselage barrels.

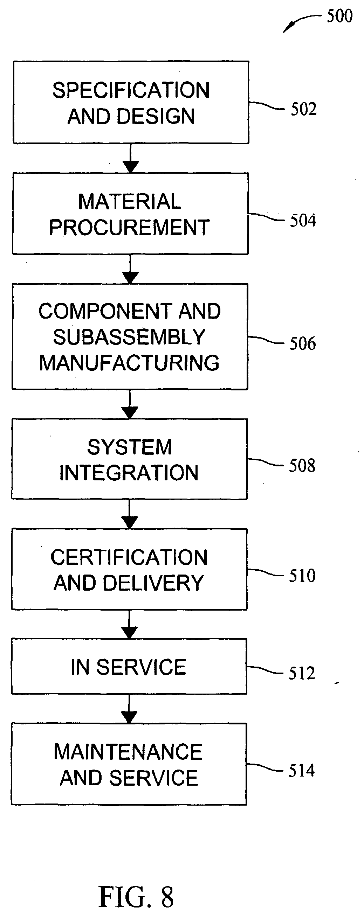

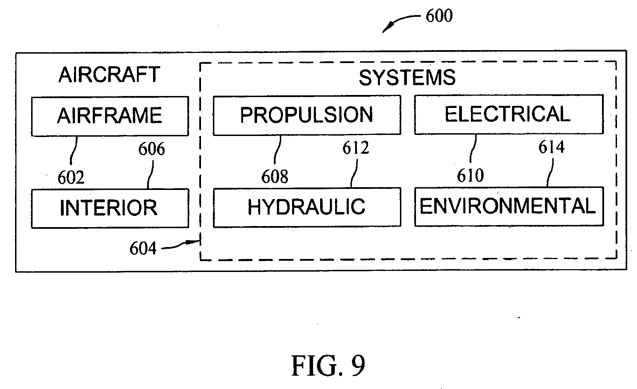

Embodiments of the disclosure may be described in the context of aircraft manufacturing and service method 500 as shown in Figure 8 and an aircraft 600 as shown in Figure 9. During pre-production, aircraft manufacturing and service method 500 may include specification and design 502 of aircraft 600 and material procurement 504.

During production, component and subassembly manufacturing 506 and system integration 508 of aircraft 600 takes place. Thereafter, aircraft 600 may go through certification and delivery 510 in order to be placed in service 512. While in service by a customer, aircraft 600 is scheduled for routine maintenance and service 514 (which may also include modification, reconfiguration, refurbishment, and so on).

Each of the processes of aircraft manufacturing and service method 500 may be performed or carried out by a system integrator, a third party, and/or an operator (e.g., a customer). For the purposes of this description, a system integrator may include, without limitation, any number of aircraft manufacturers and major-system subcontractors; a third party may include, for example, without limitation, any number of venders, subcontractors, and suppliers; and an operator may be an airline, leasing company, military entity, service organization, and so on.

As shown in Figure 9, aircraft 600 produced by aircraft manufacturing and service method 500 may include airframe 602 with a plurality of systems 604 and interior 606. Examples of systems 604 include one or more of propulsion system 608, electrical system 610, hydraulic system 612, and environmental system 614. Any number of other systems may be included in this example. Although an aerospace example is shown, the principles of the disclosure may be applied to other industries, such as the automotive industry.

Apparatus and methods embodied herein may be employed during any one or more of the stages of aircraft manufacturing and service method 500. For example, without limitation, components or subassemblies corresponding to component and subassembly manufacturing 506 may be fabricated or manufactured in a manner similar to components or subassemblies produced while aircraft 600 is in service.

Also, one or more apparatus embodiments, method embodiments, or a combination thereof may be utilized during component and subassembly manufacturing 506 and system integration 508, for example, without limitation, by substantially expediting assembly of or reducing the cost of aircraft 600. Similarly, one or more of apparatus embodiments, method embodiments, or a combination thereof may be utilized while aircraft 600 is in service, for example, without limitation, to maintenance and service 514 may be used during system integration 508 and/or maintenance and service 514 to determine whether parts may be connected and/or mated to each other.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

This written description uses examples to disclose various embodiments, which include the best mode, to enable any person skilled in the art to practice those embodiments, including making and using any devices or systems and performing any incorporated methods. The patentable scope is defined by the claims.

## Claims

1. A fiber placement system (100) comprising:
a motion system comprising a robotic arm (112);
a fiber-placement layup mandrel (110) mounted on said robotic arm; and
a fiber-placement delivery system (120) comprising a delivery head (124), said robotic arm operable for movement of said fiber-placement layup mandrel (110) with respect to and proximate said delivery head (124) for fabrication of a composite fiber part (150),
**characterized in that** said motion system is configured to:
move the composite fiber-placement layup mandrel (110) from said fiber-placement delivery system (120) to a larger layup(130); and
transfer the composite fiber part (150) from said fiber-placement layup mandrel (110) to the larger layup (130).

2. The fiber placement system (100) according to Claim 1 wherein said larger layup (130) is a barrel layup.

3. The fiber placement system (100) according to Claim 1 wherein said delivery head (124) is stationary.

4. The fiber placement system (100) according to Claim 1 wherein said fiber-placement layup mandrel (110) comprises a plurality of mandrels, said mandrels removable from said robotic arm (112), and fabricated to have multiple sizes, shapes, and contours for fabrication of multiple parts.

5. The fiber placement system (100) according to Claim 1 wherein said motion system comprises either:
a track (160), said robotic arm (112) movable along said track (160) for transfer of the composite fiber part (150) from said fiber-placement layup mandrel (110) to the larger layup ;(130).
or:
an automated guided vehicle operable to move said robotic arm for transfer of the composite fiber part (150) from said fiber-placement layup mandrel (110) to the larger layup. (130).

6. The fiber placement system (100) according to Claim 1 wherein said robotic arm (112) comprises an articulating arm (162).

7. The fiber placement system (100) according to Claim 1 wherein said fiber-placement delivery system (120) comprises material delivery components operable for delivery of fiber to said delivery head (124).

8. The fiber placement system (100) according to Claim 1 wherein said fiber-placement delivery system (120) comprises:
a stationary system mounted to a surface (170); and
a delivery head (124) operably attached to said stationary system, said delivery head (124) comprising a compaction roller (120) at a distal end thereof, said compaction roller (120) having a single axis of rotation.

9. The fiber placement system (100) according to Claim 1 further comprising a processing device programmed to guide said robotic arm (112) and control operation of said fiber-placement delivery system (120).

10. The fiber placement system (100) according to Claim 9 wherein said processing device is programmed with at least one of a computer readable model of the composite fiber part (150) to be fabricated, a computer readable representation of a surface of said mandrel (110), a computer readable representation of a surface onto which the composite fiber part is to be placed (130), and a thickness of the composite fiber part to be fabricated.

11. The fiber placement system (100) according to Claim 9 wherein said processing device is programmed with at least one of a set of movement instructions for said motion system and a set of instructions for dispensing fiber material from said fiber-placement delivery system (120).

12. The fiber placement system (100) according to Claim 1 wherein said robotic arm (112) is operable for movement of said mandrel (110) through more than one degree of freedom.

13. A method for fabrication of a composite fiber part, said method comprising:
placing a mandrel (110) for fabrication of a selected part (150) onto a robotic arm (112); and
operating the robotic arm (112) to move the mandrel (110) with respect to a delivery head (124) of a fiber-placement delivery system (120) as the fiber-placement delivery system dispenses the composite fiber onto the selected mandrel (110);
**characterized in that** the fiber-placement delivery system is stationary and by operating the robotic arm (112) to move the mandrel (110) from the fiber-placement delivery system (120) to a location where the composite fiber part (150) is to be placed onto a larger layup (130); and
transferring the composite fiber part (150) from the mandrel (110) to the larger layup(130) by releasing the composite fiber part from the mandrel (110).

14. The method according to Claim 13 wherein operating the robotic arm (112) to move the mandrel (110) comprises executing a selected program to operate the robotic arm and cause the stationary fiber-placement delivery system (120) to dispense the composite fiber through a delivery head (124).

15. The method according to Claim 13 further comprising selecting a program associated with a composite fiber part (150) to be fabricated.

## Patentansprüche

1. Faserauflegesystem (100), das aufweist:
ein Bewegungssystem, das einen Roboterarm (112) aufweist;
einen Faserauflageaufbaudorn (110), der an dem Roboterarm angebracht ist; und
ein Faserauflagenzufuhrsystem (120), das einen Zufuhrkopf (124) aufweist, wobei der Roboterarm so betrieben werden kann, dass er zum Herstellen eines Verbundfaserteils (150) den Faserauflageaufbaudorn (110) relativ und benachbart zum Zufuhrkopf (124) bewegt,
**dadurch gekennzeichnet, dass** das Bewegungssystem ausgebildet ist:
den Verbundfaserauflageaufbaudorn (110) von dem Faserauflagenzufuhrsystem (120) zu einem größeren Laminat (130) zu bewegen; und
das Verbundfaserteil (150) von dem Faserauflageaufbaudorn (110) zu dem größeren Laminat (130) zu überführen.

2. Faserauflegesystem (100) nach Anspruch 1, worin es sich bei dem größeren Laminat (130) um ein Zylinderlaminat handelt.

3. Faserauflegesystem (100) nach Anspruch 1, worin der Zufuhrkopf (124) stationär ist.

4. Faserauflegesystem (100) nach Anspruch 1, worin der Faserauflageaufbaudorn (110) mehrere Dorne umfasst, wobei die Dorne von dem Roboterarm (112) entfernt werden können und so gefertigt sind, dass sie zum Herstellen mehrerer Teile mehrere Größen, Formen und Konturen aufweisen.

5. Faserauflegesystem (100) nach Anspruch 1, worin das Bewegungssystem entweder
eine Führungsbahn (160) umfasst, wobei der Roboterarm (112) entlang der Führungsbahn (160) bewegt werden kann, um das Verbundfaserteil (150) von dem Faserauflageaufbaudorn (110) zu dem größeren Laminat (130) zu überführen;
oder
ein automatisch geführtes Fahrzeug umfasst, das dazu betrieben werden kann, den Roboterarm zum Überführen des Verbundfaserteils (150) von dem Faserauflageaufbaudorn (110) zu dem größeren Laminat (130) zu bewegen.

6. Faserauflegesystem (100) nach Anspruch 1, worin der Roboterarm (112) einen Gelenkarm (162) umfasst.

7. Faserauflegesystem (100) nach Anspruch 1, worin das Faserauflagenzufuhrsystem (120) Materialzufuhrkomponenten umfasst, die für ein Zuführen von Fasern zum Zufuhrkopf (124) betrieben werden können.

8. Faserauflegesystem (100) nach Anspruch 1, worin das Faserauflagenzufuhrsystem (120) aufweist:
ein stationäres System, das an einer Oberfläche (170) angebracht ist; und
einen Zufuhrkopf (124), der mit dem stationären System funktionell verbunden ist, wobei der Zufuhrkopf (124) an seinem distalen Ende eine Verdichtungswalze (122) und die Verdichtungswalze (122) lediglich eine Drehachse aufweist.

9. Faserauflegesystem (100) nach Anspruch 1, das ferner eine Datenverarbeitungseinrichtung aufweist, die zum Führen des Roboterarms (112) und zum Steuern eines Betriebs des Faserauflagenzufuhrsystems (120) programmiert ist.

10. Faserauflegesystem (100) nach Anspruch 9, worin die Datenverarbeitungseinrichtung mit einem computerlesbaren Modell des herzustellenden Verbundfaserteils (150) und/oder einer computerlesbaren Darstellung einer Oberfläche des Dorns (110) und/oder einer computerlesbaren Darstellung einer Oberfläche, auf die das Verbundfaserteil aufgelegt werden soll (130), und/oder einer Dicke des herzustellenden Verbundfaserteils programmiert ist.

11. Faserauflegesystem (100) nach Anspruch 9, worin die Datenverarbeitungseinrichtung mit einem Satz von Bewegungsanweisungen für das Bewegungssystem und/oder einem Satz von Anweisungen zur Abgabe eines Fasermaterials durch das Faserauflagenzufuhrsystems (120) programmiert ist.

12. Faserauflegesystem (100) nach Anspruch 1, worin der Roboterarm (112) zum Bewegen des Dorns (110) mit mehr als einem Freiheitsgrad betrieben werden kann.

13. Verfahren zur Herstellung eines Verbundfaserteils, wobei das Verfahren umfasst:
Platzieren eines Dorns (110) für die Herstellung eines ausgesuchten Teils (150) an einem Roboterarm (112); und
Betätigen des Roboterarms (112), um den Dorn (110) relativ zu einem Zufuhrkopf (124) eines Faserauflagenzufuhrsystems (120) zu bewegen, während das Faserauflagenzufuhrsystem die Verbundfaser auf dem ausgewählten Dorn (110) verteilt;
**dadurch gekennzeichnet, dass** das Faserauflagenzufuhrsystem stationär ist und der Roboterarm (112) betrieben wird, um den Dorn (110) von dem Faserauflagenzufuhrsystem (120) zu einer Stelle zu bewegen, an der das Verbundfaserteil (150) auf ein größeres Laminat (130) aufgelegt werden soll; und
Übertragen des Verbundfaserteils (150) von dem Dorn (110) auf das größere Laminat (130) durch Lösen des Verbundfaserteils vom Dorn (110).

14. Verfahren nach Anspruch 13, wobei ein Betreiben des Roboterarms (112) zum Bewegen des Dorns (110) ein Ausführen eines ausgewählten Programms umfasst, das den Roboterarm betreibt und bewirkt, dass das Faserauflagenzufuhrsystem (120) die Verbundfaser durch einen Zufuhrkopf (124) ausgibt.

15. Verfahren nach Anspruch 13, das ferner ein Auswählen eines mit dem herzustellenden Verbundfaserteil (150) verknüpften Programms umfasst.

## Revendications

1. Système de positionnement de fibre (100), comprenant :
un système de déplacement comprenant un bras robotisé (112) ; et
un mandrin de support de positionnement de fibre (110) monté sur ledit bras de robot ; et
un système de distribution de positionnement de fibre (120) comprenant une tête de distribution (124), ledit bras robotisé étant opérationnel pour un déplacement dudit mandrin de support de positionnement de fibre (110) par rapport et à proximité de ladite tête de distribution (124) pour la fabrication d'une pièce en fibre composite (150),
**caractérisé en ce que** ledit système de déplacement est configuré pour:
déplacer le mandrin de support de positionnement de fibre (110) à partir dudit système de distribution de positionnement de fibre (120) vers un plus grand support (130) ; et
transférer la pièce en fibre composite (150) à partir dudit mandrin de support de positionnement de fibre (110) vers le plus grand support (130).

2. Système de positionnement de fibre (100) selon la revendication 1, dans lequel ledit plus grand support (130) est un support cylindrique.

3. Système de positionnement de fibre (100) selon la revendication 1, dans lequel ladite tête de distribution (124) est stationnaire.

4. Système de positionnement de fibre (100) selon la revendication 1, dans lequel ledit mandrin de support de positionnement de fibre (110) comprend une pluralité de mandrins, lesdits mandrins pouvant être enlevés dudit bras robotisé (112), et étant fabriqués pour avoir plusieurs tailles, formes et contours pour la fabrication de multiples pièces.

5. Système de positionnement de fibre (100) selon la revendication 1, dans lequel ledit système de positionnement comprend, soit :
une piste (160), ledit bras robotisé (112) pouvant se déplacer le long de ladite piste (160) pour le transfert de la pièce en fibre (150) à partir dudit mandrin de support de positionnement de fibre (110) vers le plus grand support (130)
ou :
un véhicule guidé automatisé pouvant être actionné pour déplacer ledit bras robotisé pour le transfert de la pièce en fibre composite (150) à partir dudit mandrin de support de positionnement de fibre (110) vers le plus grand support (130).

6. Système de positionnement de fibre (100) selon la revendication 1, dans lequel ledit bras robotisé (112) comprend un bras articulé (162).

7. Système de positionnement de fibre (100) selon la revendication 1, dans lequel ledit système de distribution de positionnement de fibre (120) comprend des composants de distribution de matériau opérationnels pour distribuer une fibre à ladite tête de distribution (124).

8. Système de positionnement de fibre (100) selon la revendication 1, dans lequel ledit système de distribution de positionnement de fibre (120) comprend :
un système stationnaire monté sur une surface (170) ; et
une tête de distribution (124) fixée de manière opérationnelle audit système stationnaire, ladite tête de distribution (124) comprenant un rouleau de compactage (120) à une extrémité distale de celle-ci, ledit rouleau de compactage (120) comportant un axe de rotation unique.

9. Système de positionnement de fibre (100) selon la revendication 1, comprenant en outre un dispositif de traitement programmé pour guider ledit bras robotisé (112) et commander le fonctionnement dudit système de distribution de positionnement de fibre (120).

10. Système de positionnement de fibre (100) selon la revendication 9, dans lequel ledit dispositif de traitement est programmé avec au moins un élément parmi un modèle lisible par ordinateur de la pièce en fibre composite (150) à fabriquer, une représentation lisible par ordinateur d'une surface dudit mandrin (110), un représentation lisible par ordinateur d'une surface sur laquelle la pièce en fibre composite doit être placée (130), et une épaisseur de la pièce en fibre composite à fabriquer.

11. Système de positionnement de fibre (100) selon la revendication 9, dans lequel ledit dispositif de traitement est programmé avec au moins un élément parmi un ensemble d'instructions de déplacement pour ledit système de déplacement, et un ensemble d'instructions pour distribuer un matériau en fibre à partir dudit système de distribution de positionnement de fibre ( 120).

12. Système de positionnement de fibre (100) selon la revendication 1, dans lequel ledit bras robotisé (112) est opérationnel pour déplacer ledit mandrin (110) à travers plus d'un degré de liberté.

13. Procédé de fabrication d'une pièce en fibre composite, ledit procédé comportant les étapes consistant à :
placer un mandrin (110) destiné à la fabrication d'une pièce sélectionnée (150) sur un bras robotisé (112) ; et
faire fonctionner le bras robotisé (112) pour déplacer le mandrin (110) par rapport à une tête de distribution (124) d'un système de distribution de positionnement de fibre (120) lorsque le système de distribution de positionnement de fibre distribue la fibre composite jusque sur le mandrin sélectionné (110) ;
**caractérisé en ce que** le système de distribution de positionnement de fibre est stationnaire, et par l'actionnement du bras robotisé (112) pour déplacer le mandrin (110) à partir du système de distribution de positionnement de fibre (120) vers un emplacement où la pièce en fibre composite (150) doit être placée sur un plus grand support (130) ; et
transférer la pièce en fibre composite (150) à partir du mandrin (110) vers le plus grand support (130) en libérant la pièce en fibre composite du mandrin (110).

14. Procédé selon la revendication 13, dans lequel l'actionnement du bras robotisé (112) pour déplacer le mandrin (110) comprend l'exécution d'un programme sélectionné pour actionner le bras robotisé et amener le système de distribution de positionnement de fibre stationnaire (120) pour distribuer la fibre composite à travers une tête de distribution (124).

15. Procédé selon la revendication 13, comprenant en outre la sélection d'un programme associé à une pièce en fibre composite (150) à fabriquer.
